Europäisches Patentamt

European Patent Office

Office européen des brevets

(11) Publication number: **0 071 088**
A1

(12) **EUROPEAN PATENT APPLICATION**

(21) Application number: 82106304.7

(22) Date of filing: 14.07.82

(51) Int. Cl.³: **A 43 B 5/04**
A 43 B 19/00, B 29 D 27/04

(30) Priority: 24.07.81 IT 2314881

(43) Date of publication of application:
09.02.83 Bulletin 83/6

(84) Designated Contracting States:
AT CH DE FR LI

(71) Applicant: NORDICA S.p.A
Via Piave, 33
I-31044 Montebelluna (Province of Treviso)(IT)

(72) Inventor: Zorzetto, Mauro
Via Feltrina Centro, 69
I-31030 Biadene Province of Treviso(IT)

(72) Inventor: Pozzebon, Adolfo
Via F. Baracca, 112
I-31036 Sala Istrana (Prov. of Treviso)(IT)

(74) Representative: Modiano, Guido et al,
MODIANO & ASSOCIATI S.A.S. Via Meravigli, 16
I-20123 Milan(IT)

(54) Method for making an inner shoe particularly for ski boots.

(57) The method consists of die-cutting an inner lining (1) and an outer lining (2) in a pre-set shape, super-imposing and positioning into a mold (10) the die-cut linings (1, 2), casting a foamable plastics material (20) therebetween, closing the mold (10), heat bonding the overlapping peripheral edges of the linings (1, 2) at an area unaffected by the casting of the plastics material (20) and finally removing the resulting blank from the mold and finishing it by hemming or sewing operations.

Fig.4

EP 0 071 088 A1

COMPLETE DOCUMENT

This invention relates to a method for making an inner shoe particularly for ski boots.

As is known, the inner shoes utilized in ski boots are currently made by pre-arranging an inner lining and outer lining, which may have any suitable configurations and are arranged to at least partly overlap each other, and providing an inner padding which is obtained by foaming in a plastics material, generally a polyurethane one.

This procedure requires that at least a part of the edges of the inner and outer linings which are not affected by the foaming operation be joined together.

This step of joining the two linings is conventionally effected by welding, sewing, cementing, and the like processes, which must be completed prior to the plastics material injection step, or after the insertion of the plastic material which forms the padding.

It will be appreciated that this procedure involves considerable downtime in the course of the manufacturing cycle, which significantly aggravates the finished product cost, especially in view of the large number of products which are delivered in a standard mass production method.

Another drawback is that, with conventional techniques, the workpiece is to undergo frequent shifting for the various processing steps, which further aggravates labor costs.

A further disadvantage is that not unfrequently the plastifiers used to make the padding tend to migrate through the lining surfaces, thus stiffening the shoe surface and lowering its comfort level.

An added disadvantage is then that seepage of the foamed material forming the paddings may occur, which results in an unattractive appearance of foamed material on the outside.

Accordingly the task of this invention is to remove such prior drawbacks by providing a method for making an inner shoe as indicated, which enables the linings to be united together directly during the foaming in step for the padding formation, thus significantly cutting down all the production times.

Within this task it is an object of the invention to provide such a method, which in addition to affording a reduction in production time, can also ensure an improved quality product, thanks to the seepage and migration of the plastics material forming the padding is prevented in a most absolute manner.

Another object of the invention is to provide a method wherein the various production steps can be performed in a simple manner without involving the use of special or complex equipment.

Yet another object of this invention is to provide a method effective to provide a high quality product with optimum reliability and safety features.

According to one aspect of the invention, the above task and objects as well as yet other objects, such as will be apparent hereinafter, are achieved by a method for making an inner shoe particularly for ski boots, which comprises the steps of die-cutting an inner lining and an outer lining in a pre-set shape, superimposing and positioning
said linings into a mold, casting a foamable plastics material in between said linings, and closing said mold, characterized in that it comprises the further steps of heat bonding the peripheral edges of said superimposed linings at
an area unaffected by said plastics material casting, and
then removing the workpiece from said mold and carrying out
hemming or sewing operations to finish said inner shoe.

Further features and advantages will be more
apparent from the following description of a preferred,
but not limitative, embodiment of this method for making
an inner shoe particularly for ski boots, with reference
to the accompanying drawings, where:

Figure 1 illustrates the inner lining die-cutting
step;

Figure 2 illustrates the outer lining die-cutting
step;

Figure 3 illustrates the step of introducing said
linings into the mold and casting the expanding plastics
material;

Figure 4 is a sectional view through the linings,
as introduced into the mold;

Figure 5 is a schematical perspective view
of the resulting piece or blank as removed from the
mold; and

Figures 6 and 7 are a top and bottom plan views, respectively, of the finished inner shoe.

With reference to the drawing figures, the subject methodfor making an inner shoe particularly for ski boots comprises the steps of die-cutting an inner lining 1 and outer lining 2, which may have any suitable configuration.

Advantageously, the cited inner and outer linings 1 and 2 are formed from a laminate and, more specifically the inner lining 1 from a fabric layer or ply covered with an expanded material layer, and the outer lining 2, of preference, from an outer imitation leather or the like layer having a thin inside layer of an expanded material.

A peculiar feature of the invention is that on at least one of said linings, and preferably on the inner lining 1, a heat adhesive film is applied over that side thereof which includes the expanded material layer.

The linings, die-cut as described, are introduced into a mold 10 and superimposed on each other. More specifically, the lining 1 is laid onto the mold bottom and the lining 2 laid onto it, the lining 2 generally ooverlapping the lining 1 only in part since the latter would additionally extend into a wide integral portion adapted to form the cuff of the shoe.

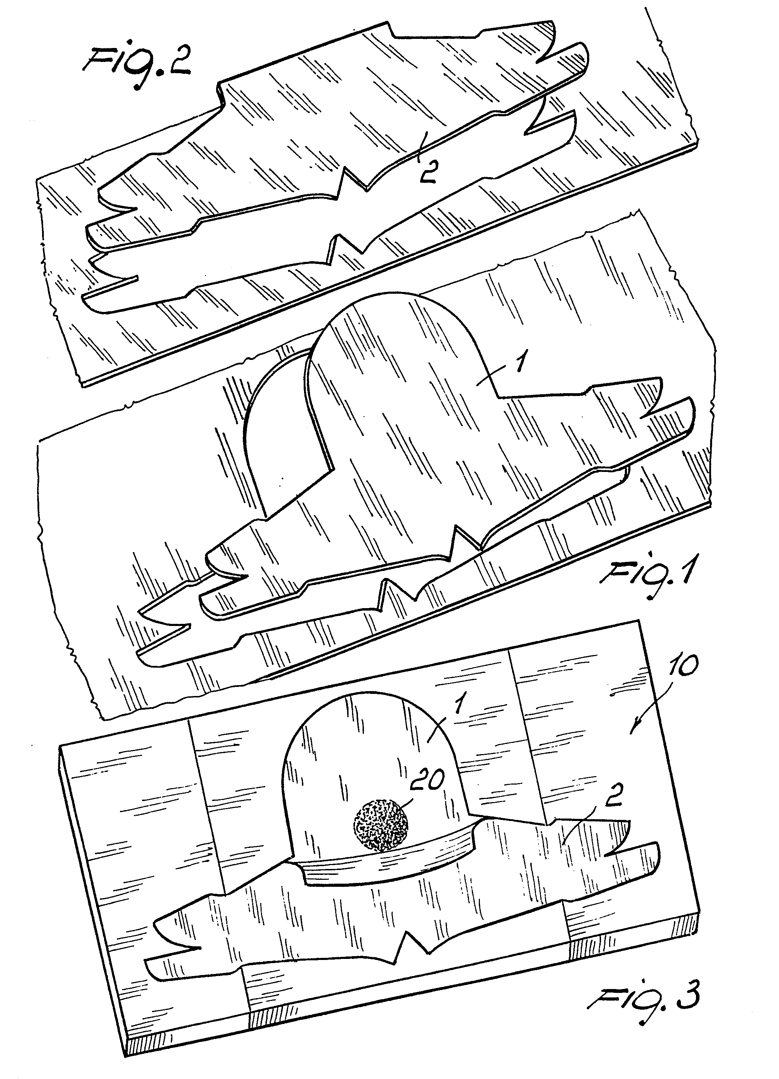

After having superimposed upon each other the inner lining 1 and outer lining 2 into the mold 10, as described, a foamable plastics material is cast in, as schematically indicated at 20 in Figure 3, which

- 6 -

0071088

may comprise a polyurethane foam or other conventional padding material.

After the above preliminary operations, the mold is closed, and the foamable plastics material is foamed simultaneously with the heat bonding of the inner lining to the outer lining at those peripheral areas thereof which are unaffected by the plastics material forming the padding.

To achieve said heat adhesion action, the mold is kept at such a temperature as to cause the heat adhesion plastification to occur by the combined effects of temperature and pressure, at the contact areas between the two linings.

It should be noted, moreover, that the provision of the heat adhesive film, which performs the vital function of ensuring heat adhesion of the two linings together, also prevents the migration of any plastifiers contained in the lining backing material and the padding material from seeping out.

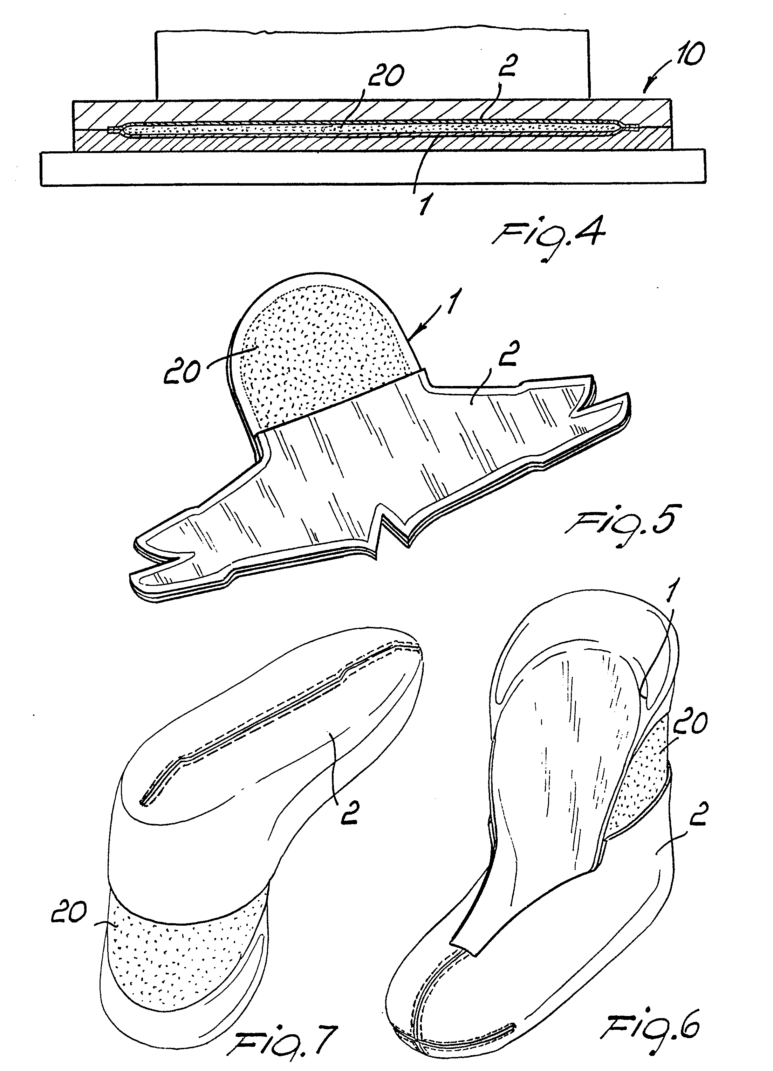

Upon completion of the above operations, the piece or blank is removed from the mold in a preconditioned state, that is ready for the conventional hemming or sewing operations which result in a finished shoe, as schematically illustrated in Figures 6 and 7. Furthermore, coverings are added on the padding portions which intervene between the two linings and would otherwise remain in open view.

It will be appreciated from the foregoing description that the invention achieves its objects, and in particular that the method according to the invention enables the inner shoe manufacturing
operations to be drastically simplified, since the
joining of the linings and foaming can be performed
concurrently, without involving any further and
separate steps of welding, cementing, or sewing, as
was instead the case with prior methods.

The invention is susceptible to many modifications
and variations, without departing from the true scope
of the instant inventive concept. Moreover, all of
the details may be replaced with other technically
equivalent elements. In practicing the invention,
the materials used, as well as the dimensions and
contingent shapes, may be any selected ones for the
intended applications.

- 8 -

0071088

## CLAIMS

1. A method for making an inner shoe particularly for ski boots, which comprises the steps of die-cutting an inner lining and an outer lining in a pre-set shape, superimposing and positioning said linings into a mold, casting a foamable plastics material in between said linings, and closing said mold, characterized in that it comprises the further steps of heat bonding the peripheral edges of said superimposed linings (1,2) at an area unaffected by said plastics material (20) casting, and then removing the workpiece from said mold (10)and carrying out hemming or sewing operations to finish said inner shoe.

2. A method for making an inner shoe according to Claim 1, characterized in that a heat adhesive film is applied on at least one of said linings (1,2), preferably on said inner lining (1).

3. A method for making an inner shoe according to the preceding claims, characterized in that within said mold (10), the heat bonding of the peripheral edges of said linings (1,2) unaffected by said plastics material (20) casting and the foaming in of said foamable plastics material (20) are carried out concurrently.

4. A method for making an inner shoe according to one or more of the preceding claims, characterized in that said heat bonding step is carried out through the combined effects of pressure and temperature.

5. An inner shoe made by the method according to the preceding claims, comprising an inner lining and an outer lining overlapping each other, and a plastics material (20) foamed therebetween, characterized in that at least one of said linings (1,2), preferably said inner lining (1), is provided with a heat adhesive film coating.

6. A method for making an inner shoe particularly for ski boots, and inner shoe obtained thereby, according to the preceding claims and as herein described and illustrated for the objects specified.

Fig.2

2

Fig.1

1

Fig.3

1

10

20

2

0071088

*Fig.4*

*Fig.5*

*Fig.7*

*Fig.6*

**0071088**

European Patent
Office

**EUROPEAN SEARCH REPORT**

Application number

EP 82 10 6304

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | EP-A-0 013 269 (KOFLACH SPORTGERATE) * Page 6, lines 7-23; figures 1-7 * | 1-6 | A 43 B 5/04<br>A 43 B 19/00<br>B 29 D 27/04 |
| Y | US-A-3 258 511 (W.A. McGREGOR) * Column 4, lines 12-33; figures 1,2 * | 1-6 | |
| A | GB-A-1 178 886 (REGIE NATIONALE DES USINES RENAULT) * Claim 1; figures 1-3 * | 1-6 | |

TECHNICAL FIELDS
SEARCHED (Int. Cl. 3)

A 43 B
B 29 D
B 29 C

The present search report has been drawn up for all claims

| Place of search | Date of completion of the search | Examiner |
|---|---|---|
| THE HAGUE | 23-08-1982 | MALIC K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503. 03.82